# EUROPÄISCHE PATENTSCHRIFT

(11) **EP 1 514 031 B1**
(45) Veröffentlichungstag und Bekanntmachung des Hinweises auf die Patenterteilung: **28.03.2007**
(21) Anmeldenummer: 03759863.8
(22) Anmeldetag: 17.06.2003
(51) Int. Cl.: F16B 35/04, F16B 43/00

(54) **SCHRAUBVERBINDUNG MIT DICHTANSATZ**
SCREWED CONNECTION HAVING A TIGHT-FITTING NECK
LIAISON PAR VIS COMPORTANT UN COL D'ETANCHEITE

(30) Priorität: 18.06.2002 DE 20209456 U; 02.04.2003 DE 10314948
(43) Veröffentlichungstag der Anmeldung: 16.03.2005
(73) Patentinhaber: Hommel, Günter, 34596 Bad Zwesten (DE)
(72) Erfinder: Hommel, Günter, 34596 Bad Zwesten (DE)
(74) Vertreter: Reinhardt, Thomas Johannes
(86) Internationale Anmeldenummer: PCT/DE2003/002022
(87) Internationale Veröffentlichungsnummer: WO 2003/106850

(56) Entgegenhaltungen:
- GB-A- 997 733
- US-A- 3 202 033
- US-A- 3 298 270
- US-A- 3 849 964
- US-B1- 6 179 538

## Beschreibung

Die Erfindung betrifft ein Verfahren zum Verbinden von Gehäuseteilen gemäß dem Oberbegriff des Anspruchs 1, sowie ein Getriebe- oder Kurbelwellengehäuse gemäß dem Oberbegriff des Anspruchs 9.

Bei Schraubverbindungen von Gehäusebauteilen kommt es häufig zu Undichtigkeiten aufgrund von Fertigungstoleranzen, Materialrissen und Materialunebenheiten. Beispielsweise bei Flanschverbindungen von Getriebe- oder Kurbelwellengehäusen für Kraftfahrzeuge, werden besondere Anforderungen an die Dichtigkeit derartiger Verbindungen gestellt, da die Verbindungsstellen hohen Öldrücken standhalten müssen, um Schäden durch auslaufendes Öl zu vermeiden. Dabei ist es wichtig, zu verhindern, dass durch die Undichtigkeiten ggf. in die Schraubenbohrungen eindringendes Öl über die Schraubenköpfe der Befestigungsschrauben nach aussen dringen kann.

Aus der US-A-3 298 270 ist eine Schraubverbindung mit Dichtring bekannt.

Weiterhin ist es bekannt, insbesondere bei rotationssymmetrischen Flanschverbindungen Mehrschraubenverbindungen, d.h. eine Mehrzahl von Befestigungsschrauben zu verwenden, um eine gleichmäßige Verteilung der erforderlichen Montagevorspannkräfte auf die anliegenden Flanschflächen zu erreichen. Herkömmliche Dichtscheiben können dann in vielen Fällen aus Bauraumgründen oder aufgrund eines erforderlichen Mindestanziehdrehmoments, dass zu unzulässigen Verformungen der Gehäusebauteile führen würde, nicht verwendet werden oder führen nicht zu der gewünschten Dichtigkeit.

Ferner ist es bekannt, Beschichtungen als Mittel für Abdichtungen, auf Auflageflächen und Dichtansätzen von Befestigungsschrauben aufzubringen. Das Verhalten derartiger Beschichtungen lässt sich jedoch bei den meist unterschiedlich großen Anziehdrehmomenten bei der Vielzahl heute verwendeter Gehäusematerialien und den verschiedenen Anforderungen an die Dichtigkeit von Gehäusen nicht immer vorhersagen, so dass diese Beschichtungen nur eingeschränkt verwendbar sind und einen zusätzlichen Aufwand bedeuten.

Aufgabe der vorliegenden Erfindung ist es daher, eine Schraubverbindung, insbesondere für Mehrschraubenverbindungen von Gehäusebauteilen zu schaffen, bei der mit einfachen Mitteln eine zuverlässige kostengünstige Dichtfunktion gewährleistet ist, und die vielseitig verwendbar ist.

### VORTEILE DER ERFINDUNG

Diese Aufgabe wird erfindungsgemäß dadurch gelöst, dass die Befestigungsschrauben jeweils in einem Übergangsbereich zwischen dem Schraubenschaft und dem Schraubenkopf einen Dichtansatz aufweisen, durch den bei einem Eindrehen der jeweiligen Befestigungsschraube ein dem Dichtansatz benachbarter äußerer Bereich der Schraubenbohrung plastisch vorformt wird, so dass sich eine Gegendichtfläche in diesem Bereich ausbildet, die in Verbindung mit dem Dichtansatz eine Dichtverbindung herstellt.

Dadurch, dass die Befestigungsschrauben einen Dichtansatz aufweisen, der durch plastisches Verformen jeweils eine Gegendichtfläche an dem Gehäuseoberteil erzeugt, lassen sich auf einfache Weise Fertigungstoleranzen in den Schraubenbohrungen des Gehäuseoberteils ausgleichen. Beim Eindrehen der Schraube wird so quasi automatisch eine haltbare und kostengünstige Dichtverbindung hergestellt. In besonders vorteilhafter Weise bildet eine Mehrzahl ringförmig angeordneter Befestigungsschrauben mit dem Dichtansatz in Verbindung mit den Gehäusebauteilen eine zuverlässige druckdichte Mehrschraubenverbindung eines Getriebegehäuses für Kraftfahrzeuge.

Nach einer bevorzugten Ausführungsform der Erfindung ist in einem zu dem Dichtansatz der jeweiligen Befestigungsschraube benachbarten Bereich der jeweiligen Schraubenbohrung eine umlaufende Ausnehmung als ein Freiraum zur Aufnahme von Materialaufwerfungen aus dem Bereich der Gegendichtfläche vorgesehen. Die Ausnehmung kann als eine Entgratung oder als eine Ausdrehung ausgebildet sein.

Dadurch, dass von der Ausnehmung beim Eindrehen der Schraube Materialaufwerfungen aufnehmbar sind, kann vermieden werden, dass sich weggedrücktes Material an unvorhergesehenen und unerwünschten Stellen im Bereich des Schraubenkopfes und/oder des Gehäuseoberteiles absetzt und die Dichtigkeit der Schraubverbindung beeinträchtigt. Dadurch wird die Zuverlässigkeit der Dichtverbindung weiter verbessert.

Gemäß einer weiteren bevorzugten Ausführungsform der Erfindung weist der Schraubenkopf der jeweiligen Befestigungsschraube auf der dem Dichtansatz zugewandten Seite eine Schraubenkopfauflagefläche auf, die bei dem Eindrehen der jeweiligen Betestigungsscnraube mit einer die jeweilig zugehörige Schraubenbohrung umrandenden und der Schraubenkopfauflagefläche benachbarten Gehäuseoberteilauflagefläche des Gehäuseoberteils zum Anliegen bringbar ist.

Durch die Auflageflächen wird die Abstützung der Befestigungsschraube an dem Gehäuseoberteil und damit die Festigkeit der Verbindung erhöht. Die Gestaltung des Dichtansatz ist vorteilhaft so abgestimmt, dass bei einem geeignet gewählten Anziehdrehmoment die Schraubenkopfauflagefläche zum Anliegen an die entsprechende Gegenfläche des Gehäuses kommt. Dadurch kann die Dichtigkeit und Festigkeit der Verbindung und die Zuverlässigkeit bei der Montage weiter erhöht werden. In besonders vorteilhafter Weise können dadurch die Festigkeits- und Dichtigkeitsanforderungen an eine Mehrschraubenverbindung für ein unter einem Öldruck von typischerweise mehreren 105 Pa stehendes Getriebegehäuse besser erfüllt werden.

Nach einer weiteren bevorzugten Ausführungsform der Erfindung ist zwischen dem Dichtansatz und der Schraubenkopfauflagefläche der jeweiligen Befestigungschraube ein umlaufender tangentenstetiger Übergang ausgebildet.

Durch den tangentenstetigen Übergang kann die Dichtverbindung ggf. auftretende Unebenheiten und Unrundheiten an den Schraubenbohrungen über ihren Umfang noch besser ausgleichen.

Gemäß einer weiteren bevorzugten Ausführungsform der Erfindung ist die Höhe und/oder die Neigung des Dichtansatzes gegenüber dem Schraubenschaft an die Abmessungen der Schraubenbohrung anpassbar.

Dadurch kann die Schraubverbindung bei einer Vielzahl von unterschiedlich dimensionierten Gehäusen eingesetzt werden. Sie ist damit sehr flexibel auch für Anwendungen mit unterschiedlichen Schraubengrößen innerhalb einer Mehrschraubenverbindung verwendbar oder bei komplexen Verbindungen mehrerer Gehäuseabschnitte untereinander einsetzbar.

Nach einer weiteren bevorzugten Ausführungsform der Erfindung ist die Höhe und/oder die Neigung des Dichtansatzes gegenüber dem Schraubenschaft an die Materialeigenschaften der Schraubenbohrung anpassbar.

Durch die Gestaltungsmöglichkeiten des Dichtansatz in der Höhe (typischerweise im Bereich von 1 mm bis 5 mm) und in der Neigung (typischerweise in einem weiten Winkelbereich zwischen 10° und 80° in Bezug auf den Schraubenschaft, bzw. die Schraubenachse), können die Befestigungsschrauben optimal auf die Materialeigenschaften, insbesondere die Materialhärte und den damit verbundenen Grad der plastischen Verformung des Bereichs um die Schraubenbohrung bei einem bestimmten Anziehdrehmoment, abgestimmt werden. Weiterhin kann verschieden großen Fertigungstoleranzen, wie sie bei Gehäusebauteilen auftreten, Rechnung getragen werden. Dadurch wird eine hohe Zuverlässigkeit der Dichtverbindung gewährleistet und deren Vielseitigkeit bzgl. der Verwendbarkeit, bei der am Markt vorhandenen Vielzahl gebräuchlicher Gehäusematerialien weiter verbessert.

In bevorzugten Ausführungsformen ist der Dichtansatz als ein mit seiner Grundfläche dem Schraubenkopf zugewandter Kegelstumpf oder als ein Kugelschnitt oder als ein Hyperboloidschnitt ausgebildet.

Durch die verschiedenen Ausgestaltungen des Dichtansatzes kann die Anpassungsfähigkeit der Befestigungsschrauben an die Materialeigenschaften, Abmessungen und Fertigungstoleranzen der Gehäusebauteile weiter verbessert werden und damit ihr Einsatzbereich wiederum erweitert werden. Besonders einfach und kostengünstig herstellbar ist der, einen Dichtkonus bildenden kegelstumpfförmige Dichtansatz.

Gemäß einer weiteren bevorzugten Ausführungsform der Erfindung ist der Dichtansatz zumindest an seiner Oberfläche aus gehärtetem Stahl ausgebildet.

In Gehäusebauteilen, insbesondere bei Getriebegehäusen aus Stahl, Eisen oder auch Aluminium, ist ein Dichtansatz mit einer gehärteten Stahloberfläche besonders vorteilhaft, um zuverlässig die Gegendichtfläche in dem entsprechenden Gehäusebauteil zu bilden. Grundsätzlich kann die Schraubverbindung aus allen gebräuchlichen Gehäuse- bzw. Schraubenmaterialien oder aus Kombinationen geeignet gewählter verschiedener derartiger Materialien ausgebildet sein.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
Figur 1: einen Ausschnitt einer Schraubverbindung mit einer Befestigungsschraube in einer Seitenansicht im Schnitt; in der linken Bildhälfte a) vor einem Eindrehen der Befestigungsschraube und in der rechten Bildhälfte b) bei eingedrehter Befestigungsschraube,
Figur 2: Eine vergrößerte Darstellung eines Gehäuseoberteils im Ausriss:
   a) mit einer Entgratung als eine Ausnehmung,
   b) mit einer Ausdrehung als die Ausnehmung,
Figur 3: eine vergrößerte Darstellung der Befestigungsschraube im Ausriss mit einem tangentenstetigen Übergang,
Fig. 4 schematisch einen erfindungsgemäßen Dichtkegel im Einsatz und im Zusammenwirken mit einer Schraube und einer Gehäusebohrung, (ohne Verformung)
Fig. 5 schematisch zwei erfindungsgemäß ineinander angeordnete, erfindungsgemäße Dichtkegel im Einsatz und im Zusammenwirken mit einer Schraube und einer Gehäusebohrung, (ohne Verformung),
Fig. 6 schematisch und nicht maßstäblich eine erfindungsgemä-ße Schraubverbindung mit Dichtkegel im kalten Zustand (gestrichelt) bzw. im warmen Zustand (strichpunktierte Kontur).

Eine Schraubverbindung besteht im Wesentlichen aus einer Mehrzahl von Befestigungsschrauben 1, mit denen ein Gehäuseoberteil 6 mit einem Gehäuseunterteil 7 verschraubt ist.

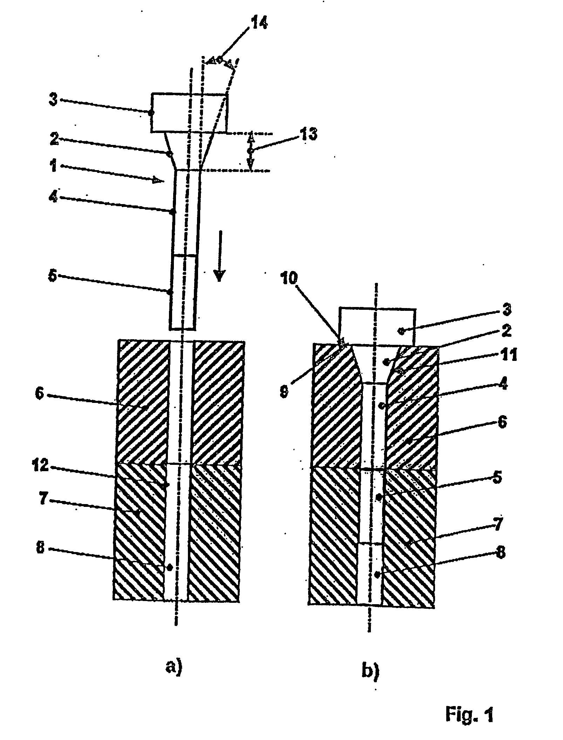

Fig.1 zeigt einen Ausschnitt aus der Schraubverbindung. Zur Vereinfachung ist nur eine Befestigungsschraube 1 mit den zugehörigen Abschnitten der Gehäusebauteile 6, 7 abgebildet. Tatsächlich besteht die Schraubverbindung aus einer Mehrzahl von Befestigungsschrauben 1, beispielsweise aus einer ringfömigen Anordnung zur Bildung einer Flanschverbindung für ein Getriebegehäuse eines Kraftfahrzeuges. Die Erfindung wird anhand der einen Befestigungsschraube 1 erläutert. Auf die weiteren Befestigungsschrauben ist die Beschreibung entsprechend übertragbar.

Die Befestigungsschraube 1 besteht aus einem Schraubenkopf 3 mit einer Schraubenkopfauflagefläche 9, einem Schraubenschaft 4 und einem Schraubengewinde 5. Zwischen dem Schraubenschaft 4 und dem Schraubenkopf 3 ist ein Dichtansatz 2, vorteilhaft als Dichtkonus ausgebildet, angeordnet. Die Gehäusebauteile 6, 7 weisen zur Aufnahme der Befestigungsschraube 1 eine Schraubenbohrung 8 auf, wobei der Fortsatz der Bohrung 8 in dem Gehäuseunterteil 7 mit einem Innengewinde 12 versehen ist.

Bei einem Eindrehen der Schraube 1 (in Pfeilrichtung) kommt der Dichtkonus 2 zunächst mit einem äußeren Rand der Verbindungsbohrung 8 den Gehäuseoberteiles 6 in Kontakt und wird mit dem weiteren Eindrehen der Schraube 1 in einen äußeren Bereich der Bohrungsrundung eingedrückt (rechte Bildhälfte). Somit wird durch eine plastische Verformung eine Gegendichtfläche 11, d.h. ein Gegenkonus ausgebildet, der in Verbindung mit dem Dichtkonus 2 der Schraube 1 eine Dichtverbindung bildet. Dabei kommt die Schraubenkopfauflagefläche 9 mit einer benachbarten Gehäuseoberteilauflagefläche 10 des Gehäuseoberteils 6 zum Anliegen. Infolge der Ausbildung der Dichtverbindung können flüssige Betriebsmittel, wie z.B. Getriebe- oder Hydrauliköl, die sich innerhalb des Gehäuses befinden und z.B. über undichte Flanschdichtungen und Gehäuserisse in der Schraubenbohrung 8 des Gehäuseoberteils 6 gelangen können, nicht nach außen entweichen.

Der Dichtkonus weist eine Höhe 13 und eine Neigung 14 (halber Regelöffnungswinkel) gegenüber dem Schaft 4 bzw. der Schraubenachse auf. Die Höhe 13 und Neigung 14 den Dichtkonus 2 können zur Anpassung an die Materialeigenschaften des Gehäuseoberteils 6 und insbesondere an die Abmessungen und die Fertigungstoleranzen der Verbindungsbohrungen 8 des Gehäuses, variiert werden.

Dazu sind in der folgenden Tabelle 1 am Beispiel einer erfindungsgemäß modifizierten Befestigungsschraube der Größe M8 nach DIN 912 vier geeignete Kombinationen von Höhe 13 und Neigung 14 sowie den sich daraus ergebenden Grundflächendurchmessers des Dichtkonus 2 angegeben:

**Tabelle 1: Auslegungsbeispiel des Dichtkonus 2 für eine Befestigungsschraube M8.**

| Konushöhe 13 [mm] | Konusneigung 14 [°] | Grundflächendurchmesser [mm] |
|---|---|---|
| 1 | 45 | 10,0 |
| 5 | 11 | 10,0 |
| 1 | 51 | 10,5 |
| 5 | 14 | 10,5 |

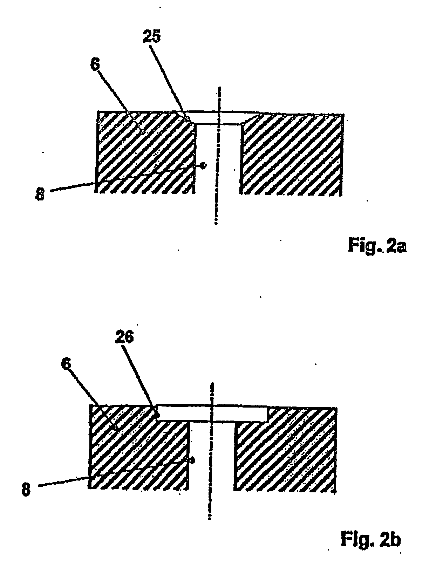

Für eine Aufnahme von Materialaufwerfungen kann eine Ausnehmung vorgesehen sein. In Fig. 2a ist in einer vergrößerten Darstellung die Ausnehmung als eine Phase, bzw. eine Entgratung 25 an dem Gehäuseoberteil 6 ausgebildet. Fig. 2b zeigt die Ausnehmung in Form einer Flachsenkung, bzw. einer Ausdrehung 26 an dem Gehäuseoberteil 6.

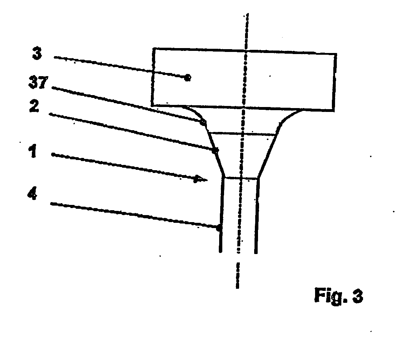

In einer weiteren bevorzugten Ausführungsform zeigt Fig. 3 einen vergrößerten Ausriss der Befestigungsschraube 1 mit einem tangentenstetigen Übergang 37 zwischen dem Dichtkonus 2 und dem Schraubenkopf 3 zum verbesserten Ausgleich von Unebenheiten und Unrundheiten an dem Gehäuseoberteil 6, insbesondere im Bereich der Schraubenbohrung 8.

Desweiteren werden folgende weitere Ergänzungen gegeben:
1. Die Dichtigkeit und das Anzugsmoment ist bei Temperaturschwankungen und unterschiedlichen Materialien mit unterschiedlichen Ausdehnungskoeffizienten durch die besondere Gestaltung des Dichtansatzes gemäß der vorliegenden Erfindung sichergestellt.

Die Wirkungsweise der Schraubverbindung wird in Ergänzung zu den Figuren 1 bis 3 dargestellt am Beispiel Aluminiumgehäuse und einem Dichtkegel aus Stahl.

Werden die Schrauben mit integriertem Dichtkegel gemäß Fig. 3 als Dichtansatz in die Verbindungsbohrung 8 in Fig. 1 gedreht, so presst sich der konische Teil in den oberen Randabschnitt der Bohrung. Der Randabschnitt der Bohrung verformt sich gemäß eindrückendem Konus und es entsteht eine Dichtfläche. Erfindungsgemäß kann nun der obere Randabschnitt der Bohrung nicht in den Hohlraum der Bohrung 8 im Gehäuseoberteil 6 einbrechen, wie es der Fall wäre bei konventioneller Schraube mit knappem Überstand. Stattdessen verformt sich der obere Randabschnitt der Bohrung und wird nach oben zum freien Ende der Bohrung gedrückt.

Wird zusätzlich der oben mit Bezug zu Fig. 3 erwähnte tangentenstetige Übergang 37 zwischen Überstand und Konusabschnitt - auch "tangentieller Randabschnitt" genannt - verwendet, so verbessert sich die Dichteigenschaft noch weiter, da der Mechanismus ähnlich verläuft. Die Dichtfläche wird noch vergrößert, weil sich das verformte Material noch besser an den tangentiellen Abschnitt anschmiegt, da das Material nicht in andere Richtungen entweichen kann. Die Einfassung ist geometrisch noch besser angepasst.

In besonderem Maße ist die Dichtung erfindungsgemäß auch nach vielen Warm/kalt Zyklen dicht:
Wenn die erfindungsgemäße Schraubverbindung in kaltem Zustand eingedreht wird bis zu einem vorgegebenen maximalen Anzugsdrehmoment, so ist es im kalten Zustand dicht.

Erwärmen sich die Materialen, so "fließt" das Material des Gehäuses bei Ausdehnung durch Temperaturanstieg in die vorhandenen Freiräume des Gehäuses -in Fig. 1 und 2 nach oben und unten, bzw., fließt bei Temperaturabfall wieder zurück in die alte Form. Die Dichtfläche ändert dabei ihre Geometrie und Form nicht, da sich die Dichtfläche im Konusbereich 2 und in dem Tangentenbereich nicht weiter ausdehnen kann. Somit bleibt die Schraubverbindung auch bei erhöhter Temperatur, beispielsweise der Betriebstemperatur eines Motors oder Getriebes, etc., und bei vorgegebenem Anzugsmoment dicht.

Beim Zurückgehen in den kalten Zustand zieht sich die Verformung in die Ausgangsposition zurück. Dabei verformt sich die Dichtfläche selbst nicht, sondern nur die oben genannten Bereiche außerhalb der Dichtfläche. Das bewirkt, dass die Dichtheit und das vorgegebene Drehmoment auch im wiedererkalteten Zustand gegeben ist. Zusammenfassend verändert sich das Anzugsdrehmoment der Schraube und die Dichtwirkung auch nach einer Vielzahl von Kalt-/ Warm Zyklen nicht. Die Dichtigkeit und das anfangs gewählte Anzugsmoment der Schraube bleiben erhalten.

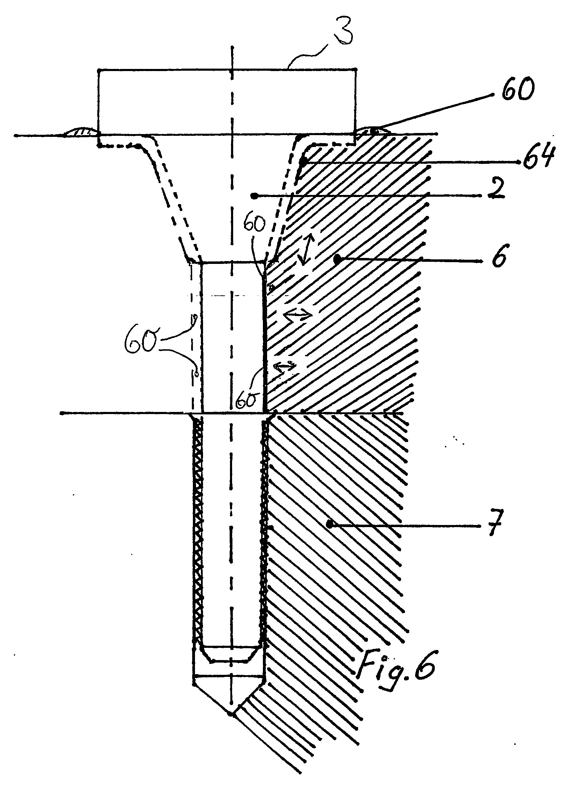

Dies ist in Fig. 6 dargestellt. Danach ist der Dichtkonus oder das Dichtkegelbauteil so geformt, dass seine Dichtkontur beim Zusammenwirken mit den Freiräumen 60 eines Gehäusebauteils 6 so ausgebildet ist, dass bei Temperaturschwankungen und Verwendung unterschiedlicher Materialien von Dichtkegel und Gehäuse 6, 7 mit unterschiedlichem Wärmeausdehnungskoeffizient die Ausdehnung oder Schrumpfung des Gehäuses in die Freiräume 60 hinein bzw. von diesen zurück erfolgt und die Kegelfläche 64 von Schraube und Gehäuse im wesentlichen unverändert bleibt, wodurch ein gleichbleibendes Anzugsmoment und Dichtheit sichergestellt wird.

### 2. Remontage und Demontage im Reparaturfall:

Das Anzugsmoment und die Dichtigkeit bei Demontage und Remontage sind mit demselben Dichtansatz sichergestellt. Die Wirkungsweise ist analog zu oben, nur mit dem Unterschied, dass bei Wiederverwendung derselbe Dichtkegel oder ein neuer Dichtkegel in die vorgeformte Bohrung eingeführt werden kann.

### 3. Gestaltungsmöglichkeiten und Abwandlungen:

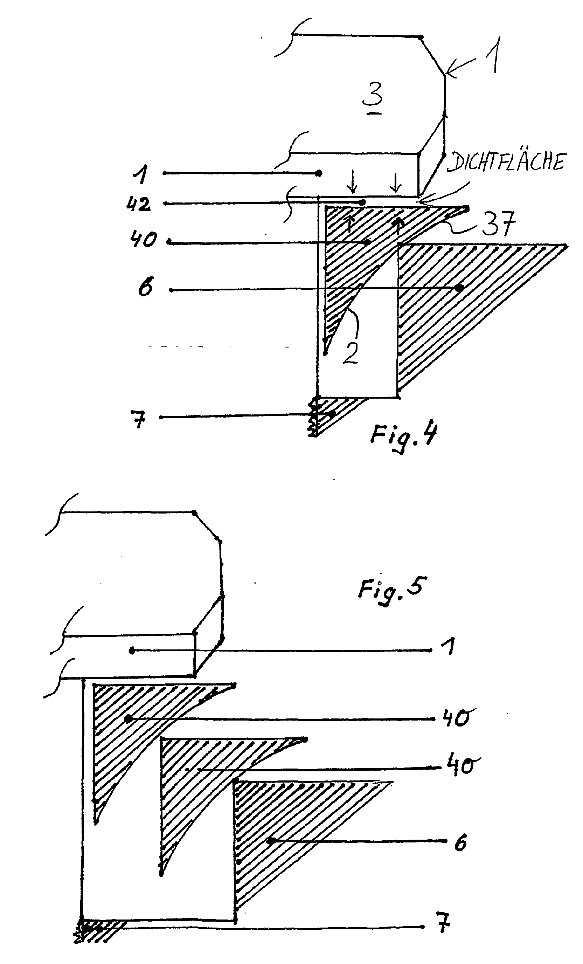

Der sogenannte Dichtansatz 2 mit oder ohne tangentiellen Übergang 37 muß nicht zwangsläufig integrierter Bestandteil der Schraube sein, wie in Fig. 1 bis 3 gezeigt, das heißt er muss nicht zwangsläufig einstückig mit der Schraube als Dichtansatz 2 ausgeführt sein. Stattdessen kann er auch, wie Fig. 4 beispielhaft zeigt, ein separates Bauteil 40 - hier Dichtkegel genannt - mit Innenloch oder Innenbohrung sein und mit einer herkömmlichen, ihn durchdringenden Schraube passenden Querschnitts zusammenwirken, so dass die erfinderische Wirkung erreicht wird. Er besitzt eine Form, deren Dichtfläche zum Querschnitt der Bohrung - oder allgemeiner des Loches - im Gehäuse 6 prinzipiell passt. Diese Form ist im Falle einer Bohrung eine rotationssymmetrische Form mit einer Dichtkontur, wie sie oben für den Dichtansatz beschrieben wurde. Desweiteren besitzt er eine für die dichtende Anlage des Schraubenkopfes vorgesehene Abdichtfläche 42 normal zur Achse des Innenlochs.

Sollte das Verbindungsloch, das in obigen Ausführungsbeispielen Bestandteil der beispielhaften Schraubverbindung ist und das Gehäuseoberteil und -unterteil miteinander verbindet, einen nichtrunden Querschnitt besitzen, so versteht sich, dass der "Dichtkegel" nach außen hin auch eine dazu passende nichtrunde Form haben kann, also im geometrischen Sinne kein Kegel mehr ist, und der sogenannte Dichtkegel dann eine Innenbohrung aufweisen kann, die mit einem weiteren Innenkonus ausgestattet ist, der als Dichtfläche wirken kann, wenn er mit einer erfindungsgemäßen Schraube mit Dichtansatz oder einer herkömmlichen Schraube und einem separaten inneren Dichtkegel zusammenwirkt. Damit ergibt sich der Vorteil, dass auch nichtrunde Verbindungslöcher abgedichtet werden können, wie es von der Anwendung im Einzelfall vorgegeben sein kann.

Das abdichtende Prinzip der vorliegenden Erfindung kann also mehrfach "ineinanderverschachtelt" wiederholt werden, wie es auch in Fig. 5 beispielhaft gezeigt ist.

In bevorzugter Ausführungsform ist der Dichtkegel im Verhältnis zum Gehäusematerial härter, damit sich der Randabschnitt der Bohrung im Gehäuse besser verformt, vgl. Fig. 1a) und Fig. 1b).

### 4. Anwendungsgebiete:

Die vorliegende Erfindung kann in den verschiedensten Technikbereichen eingesetzt werden. Sie eignet sich immer dann besonders, wenn hohe Anforderungen an die Schraubverbindung hinsichtlich Dichtigkeit und Festigkeit bei unterschiedlichen Temperaturen und Materialien gestellt werden.

## Patentansprüche

1. Verfahren zum Verbinden von Gehäuseteilen (6,7) von Getriebegehäusen oder Kurbelwellengehäusen für Kraftfahrzeuge, bei dem Befestigungsschrauben (1) verwendet werden, die jeweils mit ihrem Schraubenschaft (4) durch eine Verbindungsbohrung (8) des einen Gehäuseteiles (6) hindurchragen, und mit ihrem Gewinde in einem Innengewinde der Verbindungsbohrung des anderen Gehäuseteiles (7) verschraubt sind, so dass sich die Befestigungsschrauben an dem einen Gehäuseteil abstützen und das eine Gehäuseteil mit dem anderen lösbar verbinden, **gekennzeichnet durch** die Schritte:
a) Verwenden von Verbindungsschrauben mit einem Dichtansatz (2) mit vorgegebener Form in einem Übergangsbereich zwischen Schraubenschaft (4) und Schraubenkopf (3),
b) wobei der Dichtansatz (2) aus einem Material besteht, das härter ist als das des einen Gehäuseteils (6),
c) Eindrehen der Schraube (1) in das Innengewinde mit einem Anziehdrehmoment, das ausreicht dafür, dass sich der Dichtansatz (2) in den Randabschnitt der Verbindungsbohrung (8) des einen Gehäuseteils (6) einpresst, wobei sich **durch** Verformung des Randabschnitts eine Gegendichtfläche für den Dichtansatz (2) ausbildet, die verhindert, dass vom Gehäuseinneren in die Verbindungsbohrung (8) eindringende Flüssigkeit aus dem Gehäuse heraus dringt.

2. Verfahren nach Anspruch 1, wobei der Dichtansatz (2) konusförmig ausgebildet ist.

3. Verfahren nach dem vorstehenden Anspruch, wobei zwischen dem konusförmigen Dichtansatz (2) und dem Schraubenkopf (3) ein tangentenstetiger Übergang (37) ausgebildet ist.

4. Verfahren nach Anspruch 1, wobei zum Herstellen einer Dichtverbindung eine Verbindungsschraube (1) zusammen mit einem Dichtkegelbauteil (40) verwendet wird, wobei das Dichtkegelbauteil (40) ein Innenloch zum Hindurchführen des Schraubenschaftes (4), einen äußeren, konusförmigen oder hyperboloidförmigen Dichtansatz (2), sowie eine für die dichtende Anlage des Schraubenkopfes vorgesehene Abdichtfläche (42) normal zur Achse des Innenlochs aufweist.

5. Verfahren nach dem vorstehenden Anspruch, wobei die Dichtkontur des äußeren Dichtansatzes (2) einen tangentiellen Randabschnitt (37) enthält.

6. Verfahren nach Anspruch 1 oder 4, wobei die Höhe und die Neigung des Dichtansatzes (2) der Materialhärte des Bereichs um die Verbindungsbohrung (8) angepasst ist.

7. Verfahren nach Anspruch 1 oder 4, wobei der Dichtansatz (2) als Kugelschnitt ausgebildet ist.

8. Verfahren nach Anspruch 1 oder 4, wobei der Dichtansatz (2) als Hyperboloidschnitt ausgebildet ist.

9. Getriebegehäuse oder Kurbelwellengehäuse für Kraftfahrzeuge, enthaltend Gehäuseteile (6,7) mit Befestigungsschrauben (1), die jeweils mit ihrem Schraubenschaft (4) durch eine verbindungsbohrung (8) des einen Gehäuseteiles (6) hindurchragen, und mit ihrem Gewinde in einem Innengewinde der Verbindungsbohrung des anderen Gehäuseteiles (7) verschraubt sind, so dass sich die Befestigungsschrauben an dem einen Gehäuseteil abstützen und das eine Gehäuseteil mit dem anderen lösbar verbinden, **gekennzeichnet dadurch, daß**
a) die Verbindungsschrauben einen Dichtansatz (2) mit vorgegebener Form in einem übergangsbereich zwischen Schraubenschaft (4) und Schraubenkopf (3) aufweisen,
b) wobei der Dichtansatz (2) aus einem Material besteht, das härter ist als das des einen Gehäuseteils (6),
c) und die Schrauben (1) in das Innengewinde mit einem Anziehdrehmoment eingedreht sind, das für eine Einpressung des Dichtansatzes (2) in den Randabschnitt der Verbindungsbohrung (8) des einen Gehäuseteils (6) ausreicht, wobei durch Verformung des Randabschnitts eine Gegendichtfläche für den Dichtansatz (2) ausgebildet ist, die verhindert, dass vom Gehäuseinneren in die Verbindungsbohrung (8) eindringende Flüssigkeit aus dem Gehäuse heraus dringt.

## Claims

1. Method for connecting housing parts (6, 7) of transmission housings or crankcases for motor vehicles, in which fastening screws (1) are used which protrude in each case with their screw shaft (4) through a connecting hole (8) of one housing part (6), and are screwed with their thread into an internal thread of the connecting hole of the other housing part (7), with the result that the fastening screws are supported on one housing part and connect one housing part to the other in a releasable manner, **characterized by** the following steps:
a) use of connecting screws having a sealing attachment (2) with a predefined shape in a transition region between the screw shaft (4) and the screw head (3),
b) the sealing attachment (2) consisting of a material which is harder than that of one housing part (6),
c) screwing the screw (1) into the internal thread with a tightening torque which is sufficient for the sealing attachment (2) to be pressed into the edge section of the connecting hole (8) of one housing part (6), and an opposing sealing face for the sealing attachment (2) being formed as a result of deformation of the edge section, which opposing sealing face prevents fluid which penetrates from the housing interior into the connecting hole (8) escaping out of the housing.

2. Method according to Claim 1, the sealing attachment (2) being of conical configuration.

3. Method according to the preceding claim, a transition (37) with a continuous tangent being formed between the conical sealing attachment (2) and the screw head (3).

4. Method according to Claim 1, a connecting screw (1) being used together with a sealing cone component (40) in order to produce a sealing connection, the sealing cone component (40) having an inner hole for guiding through the screw shaft (4), an outer, conical or hyperbolic sealing attachment (2), and a sealing face (42) which is provided for sealing contact of the screw head, in a manner which is normal with respect to the axis of the inner hole.

5. Method according to the preceding claim, the sealing contour of the outer sealing attachment (2) containing a tangential edge section (37).

6. Method according to Claim 1 or 4, the height and the inclination of the sealing attachment (2) being adapted to the material hardness of the region around the connecting hole (8).

7. Method according to Claim 1 or 4, the sealing attachment (2) being configured as a spherical section.

8. Method according to Claim 1 or 4, the sealing attachment (2) being configured as a hyperbolic section.

9. Transmission housing or crankcase for motor vehicles, containing housing parts (6, 7) having fastening screws (1) which protrude in each case with their screw shaft (4) through a connecting hole (8) of one housing part (6), and are screwed with their thread into an internal thread of the connecting hole of the other housing part (7), with the result that the fastening screws are supported on one housing part and connect one housing part to the other in a releasable manner, **characterized in that**
a) the connecting screws have a sealing attachment (2) with a predefined shape in a transition region between the screw shaft (4) and the screw head (3),
b) the sealing attachment (2) consisting of a material which is harder than that of one housing part (6),
c) and the screws (1) being screwed into the internal thread with a tightening torque which is sufficient for the sealing attachment (2) to be pressed into the edge section of the connecting hole (8) of one housing part (6), an opposing sealing face for the sealing attachment (2) being formed as a result of deformation of the edge section, which opposing sealing face prevents fluid which penetrates from the housing interior into the connecting hole (8) escaping out of the housing.

## Revendications

1. Procédé pour relier des parties de boîte (6, 7) de carters de boîtes de vitesses ou de carters de vilebrequins pour véhicules automobiles, dans lequel des vis de fixation (1) sont utilisées, dont la tige de vis (4) passe chaque fois à travers un alésage de raccordement (8) de l'une des parties de boîte (6) et le filet est vissé dans un filet intérieur de l'alésage de raccordement de l'autre partie de boîte (7), de sorte que les vis de fixation s'appuient sur l'une des parties de boîte et relient de façon amovible l'une des parties de boîte à l'autre partie de boîte, **caractérisé par** les étapes suivantes :
a) utilisation de vis de raccordement comportant un col d'étanchéité (2) de forme prédéfinie dans une zone de transition entre la tige de vis (4) et la tête de vis (3),
b) le col d'étanchéité (2) étant dans un matériau plus dur que celui de l'une des parties de boîte (6),
c) vissage des vis (1) dans le filet intérieur avec un couple de serrage suffisant pour que le col d'étanchéité (2) soit pressé dans le tronçon de bord de l'alésage de raccordement (8) de l'une des parties de boîte (6), une contre-surface d'étanchéité destinée au col d'étanchéité (2) se formant par déformation du tronçon de bord, laquelle contre-surface d'étanchéité empêche la fuite hors de la boîte de fluide pénétrant dans l'alésage de raccordement (8) depuis l'intérieur de la boîte.

2. Procédé selon la revendication 1, le col d'étanchéité (2) étant de forme conique.

3. Procédé selon la revendication précédente, une transition (37) continue tangentiellement étant conformée entre le col d'étanchéité (2) de forme conique et la tête de vis (3).

4. Procédé selon la revendication 1, une vis de raccordement (1) étant utilisée conjointement avec un élément de construction à cône d'étanchéité (40) pour réaliser un raccordement étanche, l'élément de construction à cône d'étanchéité (40) présentant un trou intérieur destiné au passage de la tige de vis (4), un col d'étanchéité (2) extérieur de forme conique ou hyperbolique, ainsi qu'une surface d'étanchéité (42) perpendiculaire à l'axe du trou intérieur, destinée à l'appui étanche de la tête de vis.

5. Procédé selon la revendication précédente, le contour d'étanchéité du col d'étanchéité (2) extérieur comportant un tronçon de bord (37) tangentiel.

6. Procédé selon la revendication 1 ou 4, la hauteur et l'inclinaison du col d'étanchéité (2) étant adaptées à la dureté du matériau de la zone autour de l'alésage de raccordement (8).

7. Procédé selon la revendication 1 ou 4, le col d'étanchéité (2) étant conformé en tant que section sphérique.

8. Procédé selon la revendication 1 ou 4, le col d'étanchéité (2) étant conformé en tant que section hyperbolique.

9. Carter de boîte de vitesses ou carter de vilebrequin pour véhicules automobiles, renfermant des parties de boîte (6, 7) comportant des vis de fixation (1), dont la tige de vis (4) passe chaque fois à travers un alésage de raccordement (8) de l'une des parties de boîte (6) et le filet est vissé dans un filet intérieur de l'alésage de raccordement de l'autre partie de boîte (7), de sorte que les vis de fixation s'appuient sur l'une des parties de boîte et relient de façon amovible l'une des parties de boîte à l'autre partie de boîte, **caractérisé en ce que**
a) les vis de raccordement présentent un col d'étanchéité (2) de forme prédéfinie dans une zone de transition entre la tige de vis (4) et la tête de vis (3),
b) le col d'étanchéité (2) étant dans un matériau plus dur que celui de l'une des parties de boîte (6),
c) et **en ce que** les vis (1) sont vissées dans le filet intérieur avec un couple de serrage suffisant pour un pressage du col d'étanchéité (2) dans le tronçon de bord de l'alésage de raccordement (8) de l'une des parties de boîte (6), une contre-surface d'étanchéité destinée au col d'étanchéité (2) étant formée par déformation du tronçon de bord, laquelle contre-surface d'étanchéité empêche la fuite hors de la boîte de fluide pénétrant dans l'alésage de raccordement (8) depuis l'intérieur de la boîte.
